# EUROPEAN PATENT APPLICATION

(11) **EP 2 835 753 A1**
(43) Date of publication of application: **11.02.2015**
(21) Application number: 13771873.0
(22) Date of filing: 01.04.2013
(51) Int. Cl.: G06F 21/00

(54) **INSTALLATION PACKAGE VIRUS CHECKING AND KILLING METHOD AND DEVICE**

(30) Priority: 06.04.2012 CN 201210098769
(71) Applicant: Tencent Technology Shenzhen Company Limited, Shenzhen, Guangdong 518044 (CN)
(72) Inventor: WANG, Qing, Shenzhen Guangdong 518044 (CN); GUO, Haoran, Shenzhen Guangdong 518044 (CN); YUAN, Yixia, Shenzhen Guangdong 518044 (CN); ZHAN, Xunchang, Shenzhen Guangdong 518044 (CN); LIN, Chunyou, Shenzhen Guangdong 518044 (CN); LI, Pengtao, Shenzhen Guangdong 518044 (CN); SONG, Jiashun, Shenzhen Guangdong 518044 (CN)
(74) Representative: Jansen, Cornelis Marinus
(86) International application number: PCT/CN2013/073554
(87) International publication number: WO 2013/149569

(57) **Abstract**

Examples of the present disclosure provide a method and device for detecting virus of an installation package. The method includes: An installation package is unpacked, and description information obtained by unpacking the installation package is cached; after a virus detection startup instruction is received, the cached description information is read; the installation package is analyzed according to read description information, and whether there is a virus in the installation package is determined. Technical solutions of the present disclosure can increase the speed of installation package virus detection.

## Description

### Field of the Disclosure

The present disclosure relates to a virus checking and killing technology, and more particularly, to a method and device for detecting virus of an installation package.

### Background of the Disclosure

With the popularization of mobile terminals such as an intelligent mobile phone, various kinds of mobile terminal application software emerges in an endless stream, and many illegal or abnormal installation packages appear in the internet at the same time, among which some installation packages are the usually said mobile terminal virus, such as mobile phone virus.

At present, a virus detection function has been generally set for a mobile terminal, for instance, safety software is installed in the mobile terminal, to perform virus detection upon all installation packages in the mobile terminal. An existing virus detection scheme may include: finding out all installation packages stored in the mobile terminal after receiving a virus detection command, reading description information of the installation packages, analyzing the installation packages according to the read description information, and determining whether there is a virus or not. The description information includes an installation package name, a manufacture certificate, a Union Identification (UID), an installation package version number and a file size etc.

Finding an installation package and reading description information of the installation package is a process of unpacking the installation package, which is very time consuming; after receiving the virus detection command, unpacking and analyzing all installation packages will consume a very long time, which may greatly affect virus detection speed.

### Summary of the Disclosure

The present disclosure provides a method for detecting virus of an installation package, which may increase the speed of installation package virus detection.

The present disclosure also provides a device for detecting virus of an installation package, which may increase the speed of installation package virus detection.

The method for detecting virus of an installation package, includes:
unpacking the installation package, and caching description information obtained by unpacking the installation package;
receiving a virus detection startup instruction, and reading the cached description information;
analyzing the installation package according to read description information, and determining whether there is a virus in the installation package.

A device for detecting virus of an installation package, includes an unpacking unit, an instruction processing unit and an analyzing unit;
the unpacking unit is configured to unpack the installation package, and cache description information obtained by unpacking the installation package;
the instruction processing unit is configured to receive a virus detection startup instruction, read cached description information from the unpacking unit, and transmit the description information to the analyzing unit;
the analyzing unit is configured to analyze the installation package according to the description information, and determine whether there is a virus in the installation package.

As can be seen from above mentioned technical solutions, in the present disclosure, an installation package is unpacked and the description information is cached first, when it is needed to perform virus detection upon the installation package, the cached description information is directly read to analyze the installation package and determine whether there is a virus in the installation package. Thus, the virus detection process is divided into two asynchronous operations which are unpacking and analyzing, so that the time-consuming unpacking operation can be finished in advance, which can greatly increase the speed of virus detection.

### Brief Description of Drawings

Figure 1 is a flowchart illustrating a method for detecting virus of an installation package provided by an example of the present disclosure.
Figure 2 is a flowchart illustrating a method for detecting virus of an installation package provided by another example of the present disclosure.
Figure 3 is a schematic diagram illustrating a device for detecting virus of an installation package provided by an example of the present disclosure.

### Detailed Description of the Disclosure

In order to make object, technical solutions and advantages of the present disclosure clearer and easier to understand, the present disclosure will be described in detail hereinafter with reference to examples and accompanying drawings.

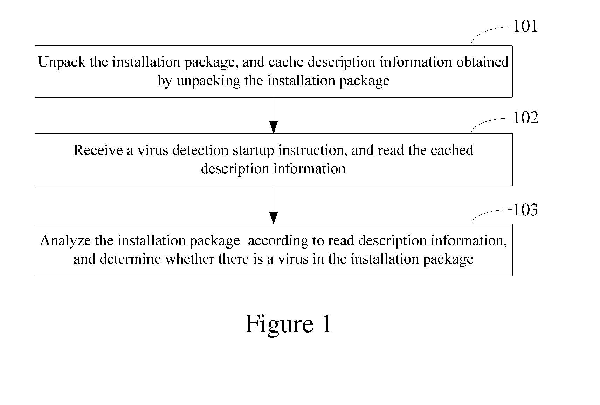

The virus detection process is divided into two asynchronous operations that are unpacking and analyzing in examples of the preset disclosure, so that the time-consuming unpacking operation may be finished in advance. Figure 1 is a flowchart illustrating a method for detecting virus of an installation package provided by an example of the present disclosure. As shown in figure 1, the method may include the following processes.

In block 101, An installation package is unpacked, and description information obtained by unpacking the installation package is cached.

In the block 101, the installation package unpacking may be performed by creating an Active Object, which may include specifically: creating an Active Object about unpacking, scheduling the Active Object, performing installation package path scanning, and reading description information of an installation package obtained through the scanning process.

Active Object is a kind of object type. After an Active Object is created, the Active Object may be scheduled when needed so as to execute corresponding operations. The Active Object created in the example of the present disclosure is an Active Object about unpacking. Before scheduling the Active Object, the method may further include: determining whether current resource is in an idle state, when current resource is in an idle state, performing the process of scheduling the Active Object. The process of determining whether current resource is in an idle state or not may include: determining whether current resource occupancy rate is less than or equal to a set value, when current resource occupancy rate is less than or equal to the set value, determining that current resource is in an idle state. The current resource occupancy rate may be, for example, CPU occupancy rate or memory occupancy rate, and so on.

The description information includes an installation package name, a manufacture certificate, UID, an installation package version number and a file size etc.

In block 102, a virus detection startup instruction is received, and the cached description information is read.

In block 103, the installation package is analyzed according to read description information, and it is determined whether there is a virus in the installation package.

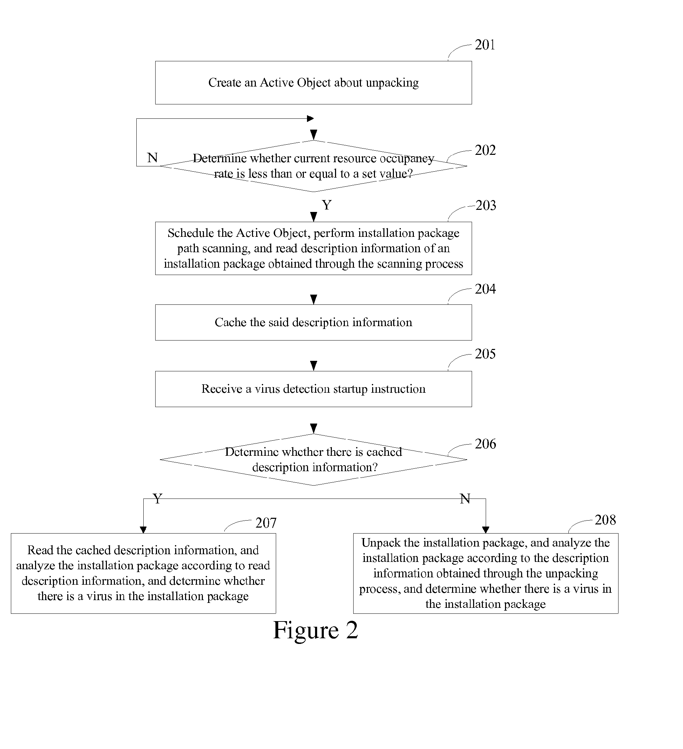

Figure 2 is a flowchart illustrating a method for detecting virus of an installation package provided by another example of the present disclosure. As shown in figure 2, the method may include the following processes.

In block 201, an Active Object about unpacking is created.

In block 202, whether current resource occupancy rate is less than or equal to a set value is determined.

It is determined whether current resource occupancy rate is less than or equal to a set value, when current resource occupancy rate is less than or equal to the set value, it is determined that current resource is in an idle state, proceed to block 203; otherwise, continue to perform the determination operation in block 202.

The set value may be set on demand.

In block 203, the Active Object is scheduled, installation package path scanning is performed, and description information of an installation package obtained through the scanning process is read.

In block 204, the description information is cached.

In block 205, a virus detection startup instruction is received.

When the user needs to perform virus detection the user may start the safety function in the mobile terminal.

In block 206, whether there is cached description information is determined, when there is cached description information, proceed to block 207; otherwise, proceed to block 208.

In block 207, the cached description information is read, and the installation package is analyzed according to read description information, and whether there is a virus in the installation package is determined.

In block 208, the installation package is unpacked, and the installation package is analyzed according to description information obtained through the unpacking process, and it is determined whether there is a virus in the installation package.

The process of unpacking the installation package may include specifically: performing installation package path scanning, and reading description information of an installation package obtained through the scanning process.

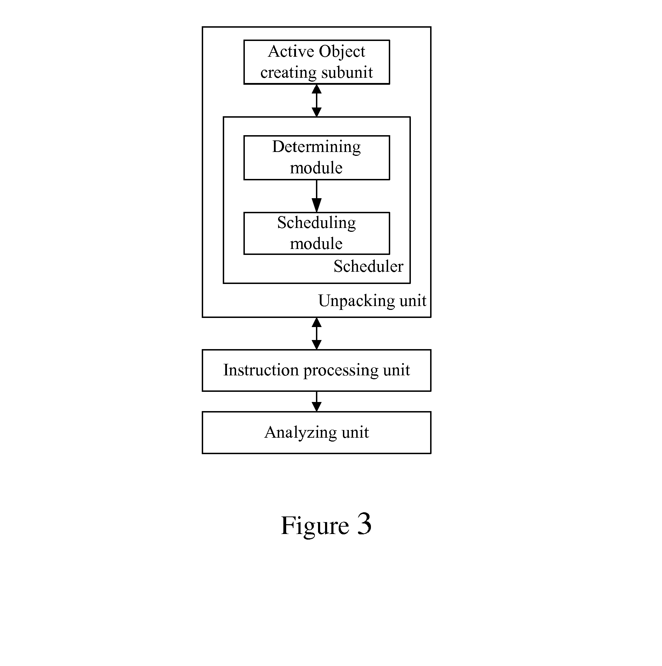

Figure 3 is a schematic diagram illustrating a device for detecting virus of an installation package provided by an example of the present disclosure. As shown in figure 3, the device may include an unpacking unit, an instruction processing unit and an analyzing unit.

The unpacking unit is configured to unpack the installation package, and cache description information obtained through the unpacking process.

The instruction processing unit is configured to receive a virus detection startup instruction, read cached description information from the unpacking unit, and transmit the description information to the analyzing unit.

The analyzing unit is configured to analyze the installation package according to the description information, and determine whether there is a virus in the installation package.

Optionally, the unpacking unit may include an Active Object creating subunit and a scheduler.

The Active Object creating subunit is configured to create the Active Object about unpacking.

The scheduler is configured to schedule the Active Object created by the Active Object creating subunit, perform installation package path scanning, and read description information of an installation package obtained through the scanning process.

Optionally, the scheduler may include a determining module and a scheduling module.

The determining module is configured to, after determining that current resource is in an idle state, send a scheduling instruction to the scheduling module.

The scheduling module is configured to receive the scheduling instruction, schedule the Active Object created by the Active Object creating subunit, perform installation package path scanning, and unpack the installation package.

Optionally, the description information may include an installation package name, a manufacture certificate, a Union Identification (UID), an installation package version number, a file size, and so on, the current resource occupancy rate may include CPU occupancy rate or memory occupancy rate.

The technical solutions provided by examples of the present disclosure may be applicable for installation package virus detection in a mobile terminal, and the mobile terminal may be a mobile phone, a Personal Digital Assistant (PDA), and so on.

In examples of the present disclosure, an installation package is unpacked and obtained description information is cached first, when it is needed to perform virus detection upon the installation package, the cached description information is directly read to analyze the installation package and determine whether there is a virus in the installation package. Thus, the virus detection process is divided into two asynchronous operations that are unpacking and analyzing, so that the time-consuming unpacking operation may be finished in advance, which can greatly increase the speed of virus detection.

Moreover, the unpacking operation may be actively executed when system resource is in an idle state, and the description information may be cached, thus, other tasks may be not affected to perform, and system idle resources may be fully utilized.

The foregoing description is only preferred examples of the present disclosure and is not used for limiting the protection scope thereof. Any modification, equivalent substitution, or improvement made without departing from the spirit and principle of the present disclosure should be covered by the protection scope of the present disclosure.

## Claims

1. A method for detecting virus of an installation package, comprising:
unpacking an installation package, and caching description information obtained by unpacking the installation package;
receiving a virus detection startup instruction, and reading the cached description information;
analyzing the installation package according to read description information, and determining whether there is a virus in the installation package.

2. The method according to claim 1, wherein, unpacking the installation package comprises:
creating an Active Object about unpacking;
scheduling the Active Object, performing installation package path scanning, and reading description information of an installation package obtained by unpacking the installation package.

3. The method according to claim 2, wherein, before scheduling the Active Object, further comprising:
determining whether current resource is in an idle state, when current resource is in an idle state, performing the scheduling the Active Object.

4. The method according to claim 3, wherein, the determining whether current resource is in an idle state comprises:
determining whether current resource occupancy rate is less than or equal to a set value, when current resource occupancy rate is less than or equal to a set value, determining that current resource is in an idle state.

5. The method according to claim 4, wherein, the current resource occupancy rate comprises:
CPU occupancy rate or memory occupancy rate.

6. The method according to any one of claims 1 to 5, wherein, the description comprises:
an installation package name, a manufacture certificate, a Union Identification (UID), an installation package version number and a file size.

7. A device for detecting virus of an installation package, comprising:
an unpacking unit, an instruction processing unit and an analyzing unit;
the unpacking unit is configured to unpack the installation package, and cache description information obtained by unpacking the installation package;
the instruction processing unit is configured to receive a virus detection startup instruction, read cached description information from the unpacking unit, and transmit the description information to the analyzing unit;
the analyzing unit is configured to analyze the installation package according to the description information, and determine whether there is a virus in the installation package.

8. The device according to claim 7, wherein, the unpacking unit comprises an Active Object creating subunit and a scheduler;
the Active Object creating subunit is configured to create an Active Object about unpacking;
the scheduler is configured to schedule the Active Object created by the Active Object creating subunit, perform installation package path scanning, and read description information of an installation package obtained after the installation package path scanning.

9. The device according to claim 8, wherein, the scheduler comprises a determining module and a scheduling module;
the determining module is configured to, after determining that current resource is in an idle state, send a scheduling instruction to the scheduling module;
the scheduling module is configured to receive the scheduling instruction, schedule the Active Object created by the Active Object creating subunit, perform installation package path scanning, and unpack the installation package.

10. The device according to claim 9, wherein, the current resource occupancy rate comprises CPU occupancy rate or memory occupancy rate.
